# EUROPÄISCHE PATENTSCHRIFT

(11) **EP 3 916 898 B1**
(45) Veröffentlichungstag und Bekanntmachung des Hinweises auf die Patenterteilung: **07.08.2024**
(21) Anmeldenummer: 21174931.2
(22) Anmeldetag: 20.05.2021
(51) Int. Cl.: H01M 50/298, H01M 50/502

(54) **ZELLVERBINDEREINHEIT**
CELL CONNECTOR UNIT
UNITÉ DE CONNEXION DE CELLULES

(30) Priorität: 28.05.2020 AT 504692020
(43) Veröffentlichungstag der Anmeldung: 01.12.2021
(73) Patentinhaber: Intensa Technische Dienstleistungen GmbH, 3812 Gross-Siegharts (AT)
(72) Erfinder: JORDAN, Günther, 3812 Groß-Siegharts (AT); HODULIK, Wolfgang, 3830 Waidhofen/Thaya (AT)
(74) Vertreter: Gibler & Poth Patentanwälte KG

(56) Entgegenhaltungen:
- DE-A1- 102012 011 607
- DE-A1- 102013 202 574
- DE-A1- 102013 210 945
- DE-A1- 102017 203 658

## Beschreibung

Die Erfindung betrifft eine Zellverbindereinheit gemäß dem Oberbegriff des Patentanspruches 1.

Elektrisch angetriebenen Maschinen, insbesondere Fahrzeugen, kommt eine immer stärkere Bedeutung zu. Bei den entsprechenden elektrischen Antrieben sind Betriebsspannungen von einigen hundert Volt üblich. Allerdings stellen einzelne elektrochemische Speicherzellen lediglich Spannungen von wenigen Volt zur Verfügung. Typisch sind Spannungen zwischen 1,2 V und 3,7 V je Speicherzelle. Batterien bzw. Akkumulatoren für den Antrieb derartiger Maschinen bzw. Fahrzeuge werden daher aus einer großen Anzahl solcher einzelner Speicherzellen zusammengebaut, wobei Speicherzellen sowohl seriell verschaltet werden um die erforderliche Potentialdifferenz zu erlangen, als auch parallel verschaltet werden um die Stromkapazität zu erhöhen. Die derart verschalteten Speicherzellen bilden eine der Batterien des Fahrzeuges.

Es ist bekannt mehrere Speicherzellen mittels biegsamer Kabelbäume elektrisch zu verbinden. Dies weist Vorteile hinsichtlich der Flexibilität beim Verbinden bestimmter Speicherzellen auf, ist jedoch sehr arbeitsaufwendig und kaum automatisierbar.

Es ist weiters bekannt mehrere Speicherzellen mittels sog. Zellverbinderplatten, Verbindereinheiten oder Zellverbindereinheiten elektrisch zusammenzuschalten. In den Zellverbindereinheiten sind elektrische Leistungsverbinder angeordnet, welche die einzelnen Speicherzellen miteinander elektrisch verbinden. Die Leistungsverbinder sind dabei in der Regel plattenförmige Metallteile, insbesondere Blechelemente, meist Aluminiumbleche. Im Betrieb kann es zu einer Erwärmung der Batterie kommen, welche zu einer Ausdehnung der Speicherzellen und damit zu einer Längenänderung führen kann. Weiters hat sich gezeigt, dass es aufgrund von Alterungsprozessen zu irreversiblen Längenänderungen der einzelnen Speicherzellen kommen kann. Der Aufbau mit plattenförmigen Leistungsverbindern weist zwar fertigungstechnische Vorteile gegenüber dem Aufbau mit einem Kabelbaum auf, zeigt sich jedoch beim Ausgleich thermischer oder anderweitig verursachter Längenänderungen deutlich unterlegen.

Es ist bekannt die Leistungsverbinder mit einer Sicke bzw. einem sog. Ausgleichsbogen zu versehen. Bei einer Ausdehnung der Speicherzellen wird der Leistungsverbinder - unter Verformung des Ausgleichsbogens -gestreckt. Dadurch ist zwar ein Ausgleich möglich, allerdings steigt dadurch auch der Herstellungsaufwand, da ein entsprechender Ausgleichsbogen in jedem Leistungsverbinder hergestellt werden muss. Dies ist nicht nur ein zusätzlicher Arbeitsgang, sondern erschwert auch das weitere Handling des Leistungsverbinders, da dieser nun nicht mehr einfach nur eine flache Platte ist. Zudem kommt es zu einer mechanischen Verformung des Leistungsverbinders, welche jedoch jeweils erst dann beginnt, wenn das Maß an elastischer Formänderung des Ausgleichsbogens überschritten wird. Jedoch bleibt stets eine rückstellend wirkende Federkraft erhalten. Dies führt zu einer ständigen mechanischen Belastung der Leistungsverbinder sowie der Kontaktstellen zu den Polen der Speicherzellen.

Sowohl die Kontaktstellen als auch die Ausgleichsbögen sind mechanisch hochbelaste Schwachstellen, an denen es aufgrund der Kerbwirkung zu einem vermehrten Auftreten von Dauerbrüchen kommen kann. Dabei ist zu bedenken, dass diese Teile durch die thermische Verformung praktisch mechanisch vorgespannt sind. Dieser Vorspannung werden die Erschütterungen und anderen Beschleunigungen, die beim Betrieb eines Fahrzeuges stets auftreten überlagert. Eine Dimensionierung auf Dauerfestigkeit findet bei diesen Bauteilen jedoch in der Regel nicht statt.

Auch sind die Kräfte, die erforderlich sind um einen Ausgleichsbogen zu verformen nicht unerheblich. Bis diese im Zuge einer Erwärmung überschritten werden, treten daher bereits große Kräfte auf, welche innerhalb bzw. zwischen den Speicherzellen wirksam sind.

Die Systeme zum Verbinden einzelner Speicherzellen weisen daher eine große Anzahl an Nachteilen auf. Insbesondere sind diese herstellungsintensiv und haben eine hohe Ausfallswahrscheinlichkeit.

Die DE 10 2013 210 945 A1 zeigt ein Zellkontaktierungssystem umfassend elektrochemische Zellen mit Zellterminals, ein Stromleitungssystem mit mehreren Zellverbindern und ein Trägerelement.

Die DE 10 2017 203 658 A1 zeigt eine Anschlusseinrichtung zur Kontaktierung von Batteriezellen einer Batterie, umfassend eine Trageinrichtung und mehrere Kontaktelemente. Die Anschlusseinrichtung wird dabei auf ein Paket aus Batteriezellen aufgesetzt, wobei wenigstens ein Kontaktelement relativ zu den anderen Kontaktelementen verschiebbar gelagert ist.

Die DE 10 2013 202 574 A1 zeigt eine Verbindungsvorrichtung zum elektrischen Verbinden mindestens einer Speicherzelle mit einem Bauteil oder einer Bauteilgruppe, wobei die Verbindungsvorrichtung zwei relativ zueinander bewegliche Teile aufweist, welche miteinander elektrisch leitend verbunden sind.

Die DE 2012 011607 A1 zeigt eine Verbindereinheit zum Kontaktieren von elektrischen Speicherzellen.

Aufgabe der Erfindung ist es daher eine Zellverbindereinheit der eingangs genannten Art anzugeben, mit welcher die genannten Nachteile vermieden werden können, mit welcher, etwa thermische, Längenänderungen ausgeglichen werden können, welche einfach herstellbar ist, und welche eine lange Lebensdauer und eine geringe Ausfallsneigung aufweist.

Erfindungsgemäß wird dies durch die Merkmale des Patentanspruches 1 erreicht. Dadurch können Längenänderungen ausgeglichen werden, wie diese etwa durch Erwärmung und Abkühlung oder durch Alterungsprozesse entstehen.

Durch die Verschiebbarkeit der ganzen Leistungsverbinder sind deutlich weniger bzw. keine Ausgleichsbögen erforderlich. Dadurch können die Leistungsverbinder als einfache, flache Platte, insbesondere als Blechstanzteil, ausgebildet werden. Dies ist einfach in der Herstellung, und vereinfacht das Handling der Leistungsverbinder im Herstellungsprozess. Weiters weisen plattenförmige Leistungsverbinder auch keine Stellen, die anfällig auf Dauerbruch sind, auf. Zudem kann durch die Verwendung flacher Platten die Bauhöhe gering gehalten werden, wodurch die Höhenoptimierung von Bauräumen vorteilhaft unterstützt wird.

Durch die Verschiebbarkeit können Längenänderungen bereits ausgeglichen werden, solange die dabei freigesetzten Kräfte noch gering sind. Es kommt nicht zum Auftreten hoher Dauerbelastungen. Zwar sind geringfügige Reibungskräfte zwischen den Leistungsverbindern und dem Isolierstoffgrundkörper zu überwinden, bevor es zu einer relativen Verschiebung zwischen Leitungsverbinder und Isolierstoffgrundkörper kommt, jedoch sind diese Reibungskräfte um Größenordnungen geringer als die Kräfte die erforderlich sind, um einen Metallbügel zu verbiegen.

Eine gegenständliche Zellverbindereinheit weist daher eine lange Lebensdauer und eine geringe Ausfallsneigung auf und ist einfach herstellbar.

Die Erfindung betrifft auch ein Verfahren zur Herstellung einer Zellverbindereinheit. Aufgabe der Erfindung ist es weiters ein Verfahren zur Herstellung einer Zellverbindereinheit der vorstehend genannten Art anzugeben, mit welchem die eingangs genannten Nachteile vermieden werden können, mit welchem einfach eine Zellverbindereinheit herstellbar ist, welche Längenänderung ausgleichen kann, und welche eine lange Lebensdauer und eine geringe Ausfallsneigung aufweist.

Erfindungsgemäß wird dies durch die Merkmale des Patentanspruches 1 erreicht.

Dadurch können die zum Patentanspruch 1 geltend gemachten Vorteile erzielt werden.

Die Unteransprüche betreffen weitere vorteilhafte Ausgestaltungen der Erfindung.

Ausdrücklich wird hiermit auf den Wortlaut der Patentansprüche Bezug genommen, wodurch die Patentansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine Batterie mit einer ersten bevorzugten Ausführungsform einer gegenständlichen Zellverbindereinheit im Grundriss;
Fig. 2 die Batterie gemäß Fig. 1 in einer ersten axonometrischen Ansicht;
Fig. 3 die Batterie gemäß Fig. 1 in einer zweiten axonometrischen Ansicht;
Fig. 4 ein erstes Detail der Batterie gemäß Fig. 1 in axonometrischer Ansicht;
Fig. 5 ein zweites Detail der Batterie gemäß Fig. 1 in axonometrischer Ansicht;
Fig. 6 ein Detail einer zweiten bevorzugten Ausführungsform einer gegenständlichen Zellverbindereinheit in axonometrischer Ansicht; und
Fig. 7 ein Detail einer dritten bevorzugten Ausführungsform einer gegenständlichen Zellverbindereinheit in axonometrischer Ansicht.

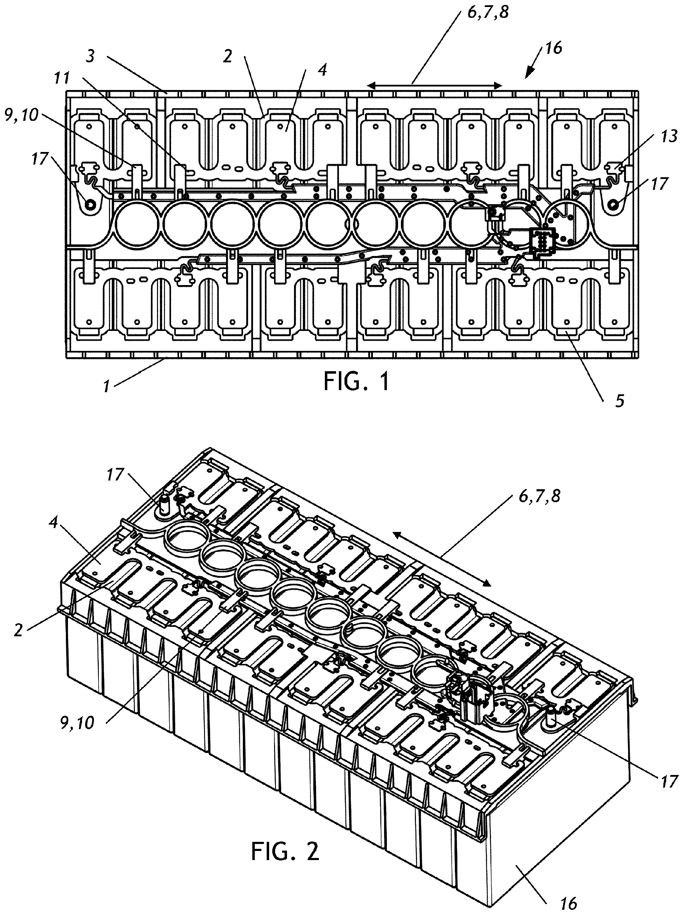

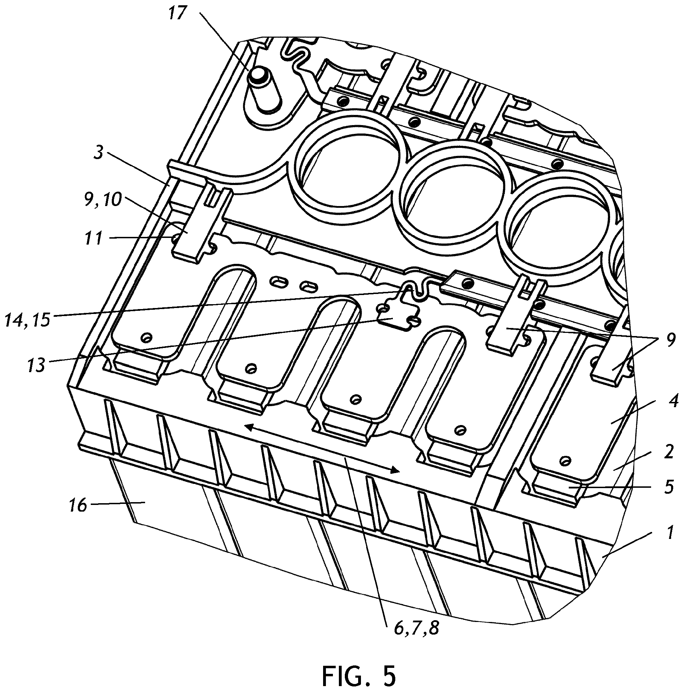

Die Fig. 1 bis 7 zeigen jeweils wenigstens Teile bzw. Details besonders bevorzugter Ausführungsformen einer Zellverbindereinheit 1 zum Kontaktieren einer vorgebbaren Mehrzahl elektrischer Speicherzellen 2, wobei die Zellverbindereinheit 1 einen Isolierstoffgrundkörper 3 aufweist, wobei die Zellverbindereinheit 1 eine vorgebbare Mehrzahl elektrischer Leistungsverbinder 4 zum vorgebbaren Verbinden von Polen 5 einzelner Speicherzellen 2 aufweist, welche Leistungsverbinder 4 in dem Isolierstoffgrundkörper 3 gehalten sind, wobei wenigstens einer, insbesondere alle, der Leistungsverbinder 4 entlang einer Verschiebelinie 6 verschiebbar in dem Isolierstoffgrundkörper 3 gelagert sind.

Dadurch können Längenänderung ausgeglichen werden, wie diese etwa durch Erwärmung und Abkühlung oder durch Alterungsprozesse entstehen.

Durch die Verschiebbarkeit der ganzen Leistungsverbinder 4 sind deutlich weniger bzw. keine Ausgleichsbögen erforderlich. Dadurch können die Leistungsverbinder 4 als einfache, flache Platte, insbesondere als Blechstanzteil, ausgebildet werden. Dies ist einfach in der Herstellung, und vereinfacht das Handling der Leistungsverbinder 4 im Herstellungsprozess. Weiters weisen plattenförmige Leistungsverbinder 4 auch keine Stellen, die anfällig auf Dauerbruch sind, auf. Zudem kann durch die Verwendung flacher Platten die Bauhöhe gering gehalten werden, wodurch die Höhenoptimierung von Bauräumen vorteilhaft unterstützt wird.

Durch die Verschiebbarkeit können Längenänderungen bereits ausgeglichen werden, solange die dabei freigesetzten Kräfte noch gering sind. Es kommt nicht zum Auftreten hoher Dauerbelastungen. Zwar sind geringfügige Reibungskräfte zwischen den Leistungsverbindern 4 und dem Isolierstoffgrundkörper 3 zu überwinden, bevor es zu einer relativen Verschiebung zwischen Leitungsverbinder 4 und Isolierstoffgrundkörper 3 kommt, jedoch sind diese Reibungskräfte um Größenordnungen geringer als die Kräfte die erforderlich sind, um einen Metallbügel zu verbiegen.

Eine gegenständliche Zellverbindereinheit weist daher eine lange Lebensdauer und eine geringe Ausfallsneigung auf und ist einfach herstellbar.

Im Kontext der gegenständlichen Ausführungen werden die Begriffe Batterie 16 und Akkumulator synonym gebraucht. Der Begriff Batterie 16 umfasst dabei auch ein sog. Batteriepaket bzw. ein Batteriemodul.

Die gegenständliche Zellverbindereinheit 1 ist dazu vorgesehen und ausgebildet eine vorgebbare Mehrzahl elektrischer Speicherzellen 2 elektrisch und mechanisch zu verbinden. Die gegenständliche Zellverbindereinheit 1 ist in der Regel Teil einer Batterie 16 bzw. eines Akkus. Dabei ist bevorzugt vorgesehen, dass die betreffende Batterie 16 weitere Mittel zur mechanischen Verbindung der einzelnen Speicherzellen 2 aufweist. Andere gebräuchliche Bezeichnungen für die Zellverbindereinheit 1 sind beispielsweise Zellverbinderplatte, Verbindereinheit, Zellkontaktplatte bzw. Verbindungsplatte.

Die Zellverbindereinheit 1 weist bevorzugt eine im Wesentlichen rechteckige plattenförmige bzw. quaderförmige Grundform auf. Allerdings kann die Zellverbindereinheit 1 auch davon abweiche Formen aufweisen. Insbesondere kann vorgesehen sein, dass die Zellverbindereinheit 1 eine wenigstens teilsphärische Grundform aufweist.

Die Zellverbindereinheit 1 weist einen Isolierstoffgrundkörper 3 auf, welcher insbesondere als Kunststoffspritzgussteil ausgebildet ist bzw. als solcher hergestellt wurde.

Die Zellverbindereinheit 1 weist eine vorgebbare Mehrzahl elektrischer Leistungsverbinder 4 auf. Mit diesen Leistungsverbindern 4 werden die einzelnen Speicherzellen 2 der Batterie 16 elektrisch verbunden. Die genaue Art der elektrischen Verschaltung, daher seriell bzw. parallel, ist dabei von der jeweiligen Anwendung abhängig. Jede der Speicherzellen 2 weist jeweils und in an sich bekannter Weise zwei Pole 5 auf. Elektrische Speicherzellen 2 bzw. elektrochemische Primärzellen sind an sich bekannter Stand der Technik, und müssen nicht näher erläutert werden. Die genaue Funktion bzw. das Prinzip der tatsächlich verwendeten Speicherzellen 2 ist für die Umsetzung der gegenständlichen Erfindung von untergeordneter Bedeutung. Die gegenständliche Zellverbindereinheit 1 ist bevorzugt mit jeder Art elektrischer Speicherzelle 2 verwendbar.

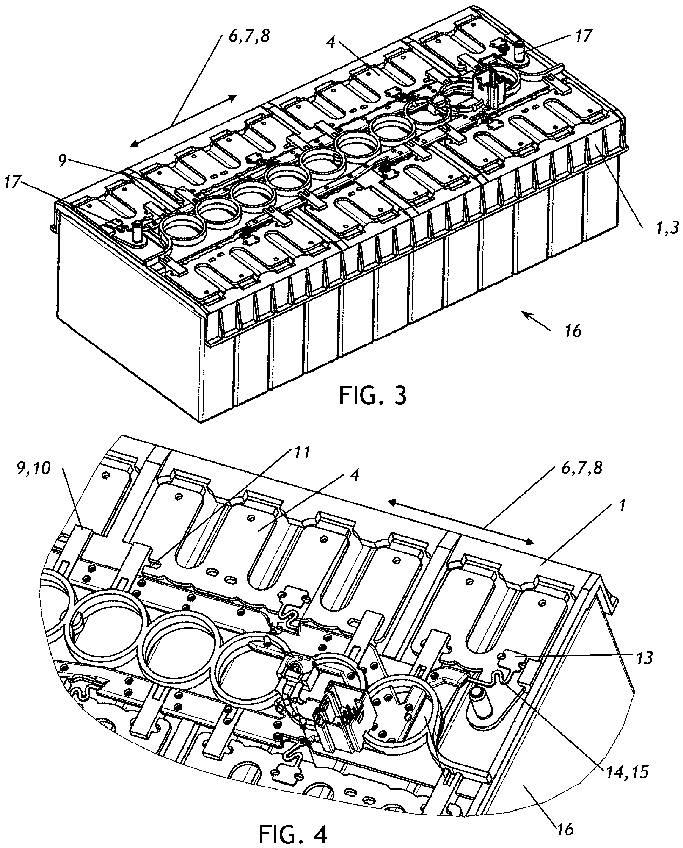

Die Leistungsverbinder 4 verbinden jeweils mindestens zwei Pole 5 unterschiedlicher Speicherzellen 2 miteinander bzw. untereinander elektrisch. An zwei der Leistungsverbindern 4 ist jeweils ein Batterie-Pol 17 der Batterie 16 angeordnet, wie beispielsweise in Fig. 4 dargestellt.

Die Leistungsverbinder 4 sind bevorzugt massive Metallteile mit guter elektrischer Leitfähigkeit. Besonders bevorzugt ist vorgesehen, dass die Leistungsverbinder 4 als Aluminiumteil ausgebildet sind. Es kann jedoch auch eine Ausbildung aus bzw. umfassend Kupfer oder Silber vorgesehen sein, sowie eine Edelmetallbeschichtung, etwa aus Gold oder Rodium. Alternative Bezeichnungen für die Leistungsverbinder 4 sind elektrische Kontaktplatte, Zellverbinder oder Kontaktbrücke.

Die einzelnen Leistungsverbinder 4 können hinsichtlich deren Formgebung unterschiedlich ausgebildet sein. Dabei können sowohl plane Leistungsverbinder 4 als auch Leistungsverbinder mit wenigstens einer partiellen Kröpfung oder Sicke bzw. wenigstens einem Bogen vorgesehen sein. Eine solche Kröpfung bzw. ein solcher Bogen kann einfach mittels Tiefziehen bzw. Prägen hergestellt werden.

Besonders bevorzugt ist jedoch vorgesehen, dass die Leistungsverbinder 4 plan ausgebildet sind, wodurch eine einfache Herstellung der Leistungsverbinder 4 selbst ermöglicht wird, als auch ein einfaches Handling derselbigen bei deren Weiterverarbeitung. Plan bedeutet dabei, dass ein derartiger Leistungsverbinder 4 eine beidseitig plane Oberfläche aufweist, welche zudem parallel sind. Besonders bevorzugt ist vorgesehen, dass die Leistungsverbinder 4 als Blechstanzteil ausgebildet sind. Es kann auch vorgesehen sein, wenigstens eine Anzahl der Leistungsverbinder als Strangpressprofil-Abschnitt auszubilden. Dadurch ist jeweils eine besonders günstige und einfache Massenfertigung möglich.

Die Leistungsverbinder 4 sind in dem Isolierstoffgrundkörper 3 gehalten bzw. gelagert. Dabei sind die Leistungsverbinder 4 fest in dem Isolierstoffgrundkörper 3 angeordnet. Dies ist derart zu verstehen, dass die Leistungsverbinder 4 nur durch deren Zerstörung oder der Zerstörung eines anderen Teiles der Zellverbindereinheit 1, insbesondere des Isolierstoffgrundkörpers 3, von diesem getrennt bzw. entfernt werden können.

Es ist vorgesehen, dass wenigstens einer, insbesondere alle, der Leistungsverbinder 4 derart in dem Isolierstoffgrundkörper 3 gelagert bzw. gehalten sind, dass diese entlang wenigstens einer vorgebbaren Verschiebelinie 6 verschoben werden können. Dabei kann an sich jede Art der Befestigung bzw. Lagerung vorgesehen sein, welche eine solche Verschiebbarkeit ermöglicht bzw. gewährleistet. Dies umfasst auch eine Halterung der Leistungsverbinder 4 mittels Federn, welche beispielsweise einstückig mit dem Isolierstoffgrundkörper 3 hergestellt werden könnten. Besonders bevorzugt ist jedoch vorgesehen, dass die Verschiebbarkeit nicht federnd ausgebildet ist. Verschieben bedeutet daher insbesondere, dass es unter Einwirkung einer Kraft und Überwindung der Haftreibung zu einer Positionsänderung kommt, und dass nach Wegfall der betreffenden Kraft bzw. sobald diese nicht mehr ausreicht die Reibung zu überwinden der Verschiebevorgang endet, wobei kein Rückstellen in eine Ursprungsposition erfolgt. Stattdessen bleibt die durch den Verschiebevorgang erreichte Position erhalten.

Erfindungsgemäß ist es vorgesehen, dass die Verschiebelinie 6 eine Gerade 7 ist. Dies ist einfach umsetzbar, und wirkungsvoll, da die auszugleichenden Längenänderungen in den meisten Fällen translatorisch sind. Besonders bevorzugt ist in diesem Zusammenhang vorgesehen, dass die Verschiebelinie 6 entlang bzw. parallel zu einer Längserstreckung 8 des Isolierstoffgrundkörpers 3 verläuft bzw. angeordnet ist. Dies ist insofern sinnvoll, als diese bei den meisten Batterien einer Richtung quer zu den Speicherzellen 2 entspricht.

Um die Verschiebbarkeit der Leistungsverbinder 4 entlang einer Geraden gegenüber dem Isolierstoffgrundkörper 3 zu ermöglichen und zu gewährleisten ist erfindungsgemäß vorgesehen, dass der Leistungsverbinder 4 - zum Verschieben entlang der Verschiebelinie 6 - in wenigstens einer Linearführung 9 gehalten ist.

Diese Linearführung wird dabei insbesondere durch entsprechende Ausbildung und entsprechendes Zusammenwirken von Isolierstoffgrundkörper 3 und Leistungsverbinder 4 gebildet.

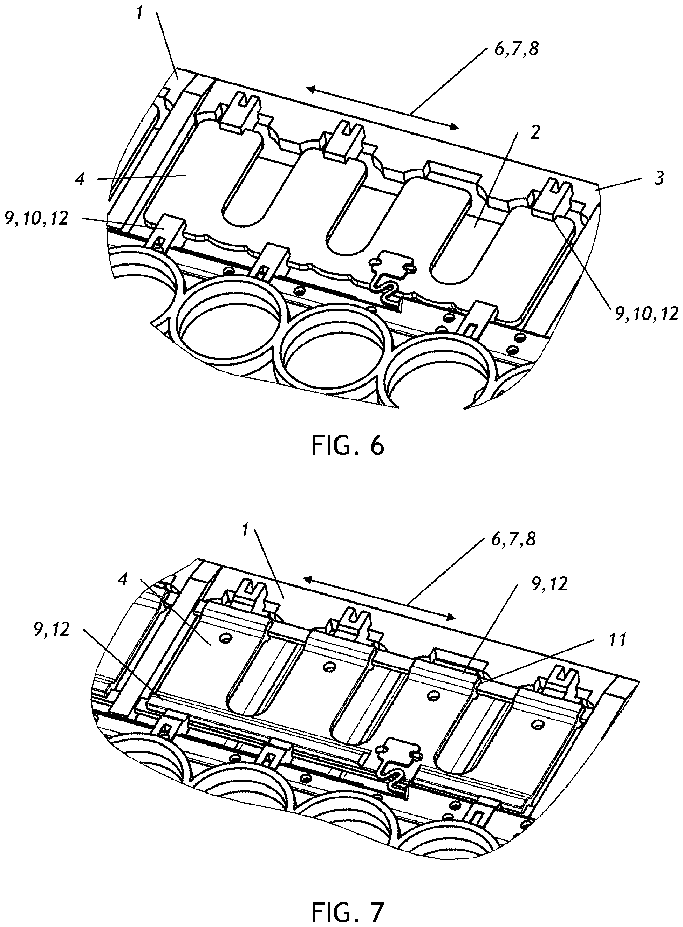

Gegenständlich werden drei besonders bevorzugte Umsetzungen derartiger Linearführungen beschrieben. Dabei zeigen die Fig. 1 bis 5 eine erste bevorzugte Ausführungsform einer Linearführung, die Fig. 6 eine zweite bevorzugte Ausführungsform einer Linearführung und die Fig. 7 eine dritte bevorzugte Ausführungsform einer Linearführung.

Allen drei bevorzugten Ausführungsformen ist gemein, dass bei diesen der Leistungsverbinder 4 mittels der Linearführung 9 formschlüssig mit dem Isolierstoffgrundkörper 3 verbunden ist. Durch diese Formschlüssigkeit ist auch gewährleistet, dass die Leistungsverbinder 4 nicht aus dem Isolierstoffgrundkörper 3 fallen, wenn dieser im Zuge der Fertigung bewegt wird. Es kann jedoch auch eine Linearführung ohne entsprechende Formschlüssigkeit vorgesehen sein.

In diesem Zusammenhang ist allen drei bevorzugten Ausführungsformen zudem gemein, dass die Möglichkeit besteht, dass diese in einem einzigen Spritzgussvorgang zusammen mit dem restlichen Isolierstoffgrundkörper 3 hergestellt werden können. Dadurch besteht die Möglichkeit die Herstellung der Zellverbindereinheit 1 deutlich zu vereinfachen. Alternativ kann jedoch auch mehrteile Ausbildung vorgesehen sein. Dabei kann etwa vorgesehen sein, dass der Isolierstoffgrundkörper 3 als Bauteil ohne die Leistungsverbinder 4 hergestellt wird, welche dann - in einem Montageschritt - in den Isolierstoffgrundkörper 3 eingesetzt bzw. an dem Isolierstoffgrundkörper 3 befestigt werden. Dieses Einsetzen bzw. Befestigen kann etwa mittels Verbindungselementen, wie etwa Schrauben, Nieten oder Sicherungsriegeln, erfolgen, bzw. mittels wenigstens eines Verformungsprozesses, wie etwa Stauchen, Nieten, Kalt- oder Heißverstemmen.

Bei der ersten bevorzugten Ausführungsform ist vorgesehen, dass der Leistungsverbinder 4 wenigstens einen Schlitz 11 als Teil der Linearführung 9 aufweist, wie dies etwa in den Fig. 1 bis 5 dargestellt ist. Der Schlitz 11 ist dabei als gerades Langloch mit abgerundeten Enden ausgebildet, kann jedoch auch anders gestaltet sein. Der Isolierstoffgrundkörper 3 weist einen Isolierstofffortsatz 10 auf, welcher den Schlitz 11 durchgreift. Bevorzugt ragt der Isolierstofffortsatz 10 nicht nur durch das Langloch, sondern hintergreift bzw. umgreift das Langloch und bildet auf der, dem Betrachter in Fig. 1 bis 5 abgewandten Seite der Leistungsverbinder 4 einen Anschlag, durch welchen eine formschlüssige Verbindung zwischen Leistungsverbinder 4 und Isolierstoffgrundkörper 3 gebildet ist.

Der Isolierstofffortsatz 10 der ersten bevorzugten Ausführungsform weist weiters auch auf der, dem Betrachter der Fig. 1 bis 5 zugewandten Seite eine Abstützfläche 12 zur Aufnahme von Kräften normal zur ersten Verschiebelinie 6 auf. Zusammen mit dem nicht sichtbaren Hinterteil des Isolierstofffortsatzes 10 ist der Leistungsverbinder 4 sicher formschlüssig gehalten.

Die Abstützflächen 12 sind in den Fig. 1 bis 5 nicht direkt zu erkennen, da jeweils verdeckt sind. Stattdessen sind die Bauteile bezeichnet, welche die Abstützflächen 12 ausbilden.

Fig. 6 zeigt die zweite bevorzugte Ausführungsform einer Linearführung 9. Dabei sind die Leistungsverbinder 4 zwischen Isolierstofffortsätzen 10 gehalten, welche jeweils klauenartig ausgebildet sind, und jeweils eine schlitzartige Führungsnut aufweisen, in welcher die einzelnen Leistungsverbinder 4 gehalten sind. Auch diese Ausbildung der Isolierstofffortsätze 10 umgreift bzw. hintergreift die Leistungsverbinder 4, und gewährleistet eine formschlüssige Halterung bei gleichzeitiger Linearverschiebbarkeit, und einfacher Herstellbarkeit in nur einem Arbeitsgang. Die klauenartigen Isolierstofffortsätze 10 bilden dabei auch jeweils Abstützflächen 12 zur Aufnahme von Kräften normal zur ersten Verschiebelinie 6 aus.

Fig. 7 zeigt die dritte bevorzugte Ausführungsform einer Linearführung 9. Dabei ist ein Teil des Isolierstoffgrundkörpers 3 als Führungsschiene ausgebildet, welche von einem Außenbereich der Leistungsverbinder 4 beidseitig umgriffen wird. Bei dieser Ausführungsform weist der Leistungsverbinder 4 eine Nut bzw. einen klauenartigen Endabschnitt auf. Auch bei dieser Ausführungsform können Normalkräfte übertragen werden. Der, dem Außenbereich abgewandte Innenbereich der Leistungsverbinder 4 weist ebenfalls eine Nut auf, in welche eine Feder bzw. Rippe des Isolierstoffgrundkörpers 3 eingreift. Es kann auch vorgesehen sein, wenigstens an dem Außenbereich oder dem Innenbereich eine Nut an dem Isolierstoffgrundkörper 3 auszubilden, in welche eine Feder des Leistungsverbinders 4 eingreift. Erfindungsgemäß umfasst die Linearführung wenigstens einen Isolierstofffortsatz, welcher wenigstens einen Teil des Leistungsverbinders umgreift.

Die Zellverbindereinheit 1 weist als weitere Baugruppe eine vorgebbare Mehrzahl Messverbinder 13 auf, wobei jeweils ein Messverbinder 13 einen Leistungsverbinder 4 elektrisch kontaktiert. Dies ist an sich bekannt und bei den meisten derartigen Batterien 16 weithin üblich, etwa mittels Kabel- und/oder Leitungssätzen oder Folienprints, FPC. Bevorzugt ist vorgesehen, dass die Messverbinder 13 plan, insbesondere als Blechstanzteile, ausgebildet sind, wodurch die einfache und kostengünstige Herstellung der Zellverbindereinheit 1 weiter unterstützt wird.

Zum Ausgleich der Längenänderungen ist bevorzugt vorgesehen, dass die Messverbinder 13 jeweils einen Lageänderungsausgleichsabschnitt 14 aufweisen. Dieser Lageänderungsausgleichsabschnitt 14 ist besonders bevorzugt als Mäanderstruktur 15 ausgebildet. Nachfolgend werden Grundsätze für das Verständnis und die Auslegung gegenständlicher Offenbarung angeführt.

Merkmale werden üblicherweise mit einem unbestimmten Artikel "ein, eine, eines, einer" eingeführt. Sofern es sich aus dem Kontext nicht anders ergibt, ist daher "ein, eine, eines, einer" nicht als Zahlwort zu verstehen.

Das Bindewort "oder" ist als inklusiv und nicht als exklusiv zu interpretieren. Sofern es sich aus dem Kontext nicht anders ergibt, umfasst "A oder B" auch "A und B", wobei "A" und "B" beliebige Merkmale darstellen.

Ein "im Wesentlichen" in Verbindung mit einem Zahlenwert mitumfasst eine Toleranz von ± 10% um den angegebenen Zahlenwert, sofern es sich aus dem Kontext nicht anders ergibt.

## Patentansprüche

1. Zellverbindereinheit (1) zum Kontaktieren einer vorgebbaren Mehrzahl elektrischer Speicherzellen (2), wobei die Zellverbindereinheit (1) einen Isolierstoffgrundkörper (3) aufweist, wobei die Zellverbindereinheit (1) eine vorgebbare Mehrzahl elektrischer Leistungsverbinder (4) zum vorgebbaren Verbinden von Polen (5) einzelner Speicherzellen (2) aufweist, welche Leistungsverbinder (4) in dem Isolierstoffgrundkörper (3) gehalten sind, wobei wenigstens einer, insbesondere alle, der Leistungsverbinder (4) entlang einer Verschiebelinie (6) verschiebbar in dem Isolierstoffgrundkörper (3) gelagert sind, wobei der Leistungsverbinder (4) - zum Verschieben entlang der geraden Verschiebelinie (6) - in wenigstens einer Linearführung (9) gehalten ist, **dadurch gekennzeichnet, dass** die Linearführung (9) wenigstens einen Isolierstofffortsatz (10) umfasst, welcher wenigstens einen Teil des Leistungsverbinders (4) umgreift.

2. Zellverbindereinheit (1) nach Anspruch 1 oder 2, **dadurch gekennzeichnet, dass** die Verschiebelinie (6) entlang einer Längserstreckung (8) des Isolierstoffgrundkörpers (3) verläuft.

3. Zellverbindereinheit (1) nach einem der Ansprüche 1 bis 3, **dadurch gekennzeichnet, dass** der Leistungsverbinder (4) mittels der Linearführung (9) formschlüssig mit dem Isolierstoffgrundkörper (3) verbunden ist.

4. Zellverbindereinheit (1) nach einem der Ansprüche 1 bis 4, **dadurch gekennzeichnet, dass** der Leistungsverbinder (4) wenigstens einen Schlitz (11) aufweisen, und dass der Isolierstofffortsatz (10) den Schlitz (11) durchgreift.

5. Zellverbindereinheit (1) nach Anspruch 4, **dadurch gekennzeichnet, dass** der Isolierstofffortsatz (10) einstückig mit dem Isolierstoffgrundkörper (3) ausgebildet ist.

6. Zellverbindereinheit (1) nach einem der Ansprüche 1 bis 6, **dadurch gekennzeichnet, dass** die Linearführung (9) wenigstens eine Abstützfläche (12) zur Aufnahme von Kräften normal zur ersten Verschiebelinie (6) aufweist

7. Zellverbindereinheit (1) nach einem der Ansprüche 1 bis 7, **dadurch gekennzeichnet, dass** der Isolierstoffgrundkörper (3) als Kunststoffspritzgussteil ausgebildet ist.

8. Zellverbindereinheit (1) nach einem der Ansprüche 1 bis 8, **dadurch gekennzeichnet, dass** die Leistungsverbinder (4) plan ausgebildet sind.

9. Zellverbindereinheit (1) nach einem der Ansprüche 1 bis 9, **dadurch gekennzeichnet, dass** die Leistungsverbinder (4) als Blechstanzteil oder als Strangpressprofil-Abschnitt ausgebildet sind.

10. Zellverbindereinheit (1) nach einem der Ansprüche 1 bis 9, **dadurch gekennzeichnet, dass** die Zellverbindereinheit (1) eine vorgebbare Mehrzahl Messverbinder (13) aufweist, wobei jeweils ein Messverbinder (13) einen Leistungsverbinder (4) elektrisch kontaktiert, und dass die Messverbinder (13) plan, insbesondere als Blechstanzteile, ausgebildet sind.

11. Zellverbindereinheit (1) nach Anspruch 11, **dadurch gekennzeichnet, dass** die Messverbinder (13) jeweils einen Lageänderungsausgleichsabschnitt (14) aufweisen.

12. Zellverbindereinheit (1) nach Anspruch 12, **dadurch gekennzeichnet, dass** der Lageänderungsausgleichsabschnitt (14) als Mäanderstruktur (15) ausgebildet ist.

13. Batterie (16), insbesondere Fahrzeugbatterie, mit einer vorgebbaren Mehrzahl elektrischer Speicherzellen (2), **dadurch gekennzeichnet, dass** die Speicherzellen (2) mit einer Zellverbindereinheit (1) nach einem der Ansprüche 1 bis 13 verbunden sind.

14. Verfahren zur Herstellung einer Zellverbindereinheit (1) nach einem der Ansprüche 1 bis 13, wobei wenigstens ein Leistungsverbinder (4) in einer Spritzgussform eines Isolierstoffgrundkörpers (3) angeordnet wird, wobei nachfolgend die Spritzgussform im Zuge eines Spritzgussvorganges mit einer Kunststoffmasse befüllt wird, wobei im Zuge des Spritzgussvorganges eine, einen Isolierstofffortsatz (10) umfassende, Linearführung (9) zwischen dem Isolierstoffgrundkörper (3) und dem Leistungsverbinder (4) - mit Umgreifen wenigstens eines Teiles des Leistungsverbinders (4) - ausgebildet wird, wobei der Leistungsverbinder (4) lediglich durch die eingebrachte Kunststoffmasse verschiebbar in dem Isolierstoffgrundkörper (3) gehalten wird.

## Claims

1. Cell connector unit (1) for contacting a predeterminable plurality of electrical storage cells (2), whereby the cell connector unit (1) having an insulating material base body (3), whereby the cell connector unit (1) having a predeterminable plurality of electrical power connectors (4) for the predeterminable connection of poles (5) of individual storage cells (2), which power connectors (4) are held in the insulating material base body (3), whereby at least one, in particular all, of the power connectors (4) being mounted in the insulating material base body (3) so as to be displaceable along a line of displacement (6), whereby the power connector (4) - for displacement along the straight line of displacement (6) - being held in at least one linear guide (9), **characterized in that** the linear guide (9) comprises at least one insulating material extension (10), which encompasses at least part of the power connector (4).

2. Cell connector unit (1) according to claim 1 or 2, **characterized in that** the line of displacement (6) runs along a longitudinal extension (8) of the insulating material base body (3).

3. Cell connector unit (1) according to one of claims 1 to 3, **characterized in that** the power connector (4) is positively connected to the insulating material base body (3) by means of the linear guide (9).

4. Cell connector unit (1) according to one of claims 1 to 4, **characterized in that** the power connector (4) has at least one slot (11), and **in that** the insulating material extension (10) extends through the slot (11).

5. Cell connector unit (1) according to claim 4, **characterized in that** the insulating material extension (10) is embodied in one piece with the insulating material base body (3).

6. Cell connector unit (1) according to one of claims 1 to 6, **characterized in that** the linear guide (9) has at least one support surface (12) for absorbing forces normal to the first line of displacement (6).

7. Cell connector unit (1) according to one of claims 1 to 7, **characterized in that** the insulating material base body (3) is embodied as a plastic injection-moulded part.

8. Cell connector unit (1) according to one of claims 1 to 8, **characterized in that** the power connectors (4) are embodied flat.

9. Cell connector unit (1) according to one of claims 1 to 9, **characterized in that** the power connectors (4) are embodied as a sheet metal stamped part or as an extruded profile section.

10. Cell connector unit (1) according to one of claims 1 to 9, **characterized in that** the cell connector unit (1) has a predeterminable plurality of measuring connectors (13), in each case one measuring connector (13) making electrical contact with a power connector (4), and **in that** the measuring connectors (13) are embodied flat, in particular as sheet metal stampings.

11. Cell connector unit (1) according to claim 11, **characterized in that** the measuring connectors (13) each have a position change compensation section (14).

12. Cell connector unit (1) according to claim 12, **characterized in that** the position change compensation section (14) is embodied as a meander structure (15).

13. Battery (16), in particular vehicle battery, having a predeterminable plurality of electrical storage cells (2), **characterized in that** the storage cells (2) are connected to a cell connector unit (1) according to one of claims 1 to 13.

14. Method for producing a cell connector unit (1) according to one of claims 1 to 13, wherein at least one power connector (4) is arranged in an injection mold of an insulating material base body (3), whereby subsequently the injection mold is filled with a plastic mass in the course of an injection molding process, whereby in the course of the injection molding process an, linear guide (9) comprising an insulating material extension (10) is embodied between the insulating material base body (3) and the power connector (4) - encompassing at least part of the power connector (4) - during the injection molding process, whereby the power connector (4) being held displaceably in the insulating material base body (3) solely by the plastic mass introduced.

## Revendications

1. Unité de connexion de cellules (1) pour contacter une pluralité prédéterminable de cellules de stockage électriques (2), l'unité de connexion de cellules (1) ayant un corps de base en matériau isolant (3), l'unité de connexion de cellules (1) ayant une pluralité prédéterminable de connecteurs de puissance électriques (4) pour la connexion prédéterminable de pôles (5) de cellules de stockage individuelles (2), ces connecteurs de puissance (4) étant maintenus dans le corps de base en matériau isolant (3), au moins un, en particulier tous les connecteurs de puissance (4) étant montés dans le corps de base en matériau isolant (3) de manière à pouvoir être déplacés le long d'une ligne de déplacement (6), en particulier tous les connecteurs de puissance (4) étant montés dans le corps de base en matériau isolant (3) de manière à pouvoir être déplacés le long d'une ligne de déplacement (6), le connecteur de puissance (4) - pour le déplacement le long de la ligne droite de déplacement (6) - étant maintenu dans au moins un guide linéaire (9), **caractérisé en ce que** le guide linéaire (9) comprend au moins une extension en matériau isolant (10), qui englobe au moins une partie du connecteur de puissance (4).

2. Unité de branchement cellulaire (1) selon la revendication 1 ou 2, **caractérisée en ce que** la ligne de déplacement (6) s'étend le long d'une extension longitudinale (8) du corps de base en matériau isolant (3).

3. Unité de branchement cellulaire (1) selon l'une des revendications 1 à 3, **caractérisée par le fait que** le connecteur d'alimentation (4) est relié positivement au corps de base en matériau isolant (3) au moyen du guide linéaire (9).

4. Unité de branchement cellulaire (1) selon l'une des revendications 1 à 4, **caractérisée en ce que** le connecteur de puissance (4) présente au moins une fente (11), et **en ce que** l'extension de matériau isolant (10) s'étend à travers la fente (11).

5. Unité de connecteur cellulaire (1) selon la revendication 4, **caractérisée en ce que** l'extension de matériau isolant (10) est constituée d'une seule pièce avec le corps de base de matériau isolant (3).

6. Unité de connexion cellulaire (1) selon l'une des revendications 1 à 6, **caractérisée en ce que** le guide linéaire (9) comporte au moins une surface d'appui (12) pour absorber les forces normales à la première ligne de déplacement (6).

7. Unité de branchement cellulaire (1) selon l'une des revendications 1 à 7, **caractérisée en ce que** le corps de base en matériau isolant (3) est constitué d'une pièce en plastique moulée par injection.

8. Unité de branchement cellulaire (1) selon l'une des revendications 1 à 8, **caractérisée par le fait que** les connecteurs d'alimentation (4) sont réalisés à plat.

9. Unité de connexion cellulaire (1) selon l'une des revendications 1 à 9, **caractérisée par le fait que** les connecteurs de puissance (4) sont réalisés sous la forme d'une pièce estampée en tôle ou d'un profilé extrudé.

10. Unité de connecteur cellulaire (1) selon l'une des revendications 1 à 9, **caractérisée en ce que** l'unité de connecteur cellulaire (1) a une pluralité prédéterminable de connecteurs de mesure (13), dans chaque cas un connecteur de mesure (13) établissant un contact électrique avec un connecteur de puissance (4), et **en ce que** les connecteurs de mesure (13) sont réalisés à plat, en particulier sous forme d'emboutissage de tôle.

11. Unité de connecteur cellulaire (1) selon la revendication 11, **caractérisée en ce que** les connecteurs de mesure (13) ont chacun une section de compensation de changement de position (14).

12. Unité de connexion cellulaire (1) selon la revendication 12, **caractérisée en ce que** la section de compensation de changement de position (14) est réalisée sous la forme d'une structure en méandre (15).

13. Batterie (16), en particulier batterie de véhicule, comportant une pluralité prédéterminable d'éléments de stockage électrique (2), **caractérisée en ce que** les éléments de stockage (2) sont connectés à une unité de connecteur d'éléments (1) selon l'une des revendications 1 à 13.

14. Procédé de fabrication d'une unité de branchement cellulaire (1) selon l'une des revendications 1 à 13, dans lequel au moins un connecteur de puissance (4) est placé dans un moule d'injection d'un corps de base en matériau isolant (3), le moule d'injection étant ensuite rempli d'une masse plastique au cours d'un processus de moulage par injection, au cours duquel un guide linéaire (9) comprenant un matériau isolant (3) est placé dans un moule d'injection (4), un guide linéaire (9) comprenant une extension en matériau isolant (10) est placé entre le corps de base en matériau isolant (3) et le connecteur de puissance (4) - englobant au moins une partie du connecteur de puissance (4) - au cours du processus de moulage par injection, le connecteur de puissance (4) étant maintenu de manière déplaçable dans le corps de base en matériau isolant (3) uniquement par la masse de plastique introduite.
